# EUROPEAN PATENT APPLICATION

(11) **EP 2 833 441 A1**
(43) Date of publication of application: **04.02.2015**
(21) Application number: 13768533.5
(22) Date of filing: 15.03.2013
(51) Int. Cl.: H01M 4/02, H01M 4/14, H01M 10/12, H01G 9/048

(54) **ELECTRODE PLATE AND ELECTRODE ASSEMBLY, STORAGE BATTERY, AND CAPACITOR COMPRISING ELECTRODE PLATE**

(30) Priority: 26.03.2012 CN 201210082733
(71) Applicant: SHANGHAI ZULI NEW ENERGY TECHNOLOGY CO., LTD., Baoshan district Shanghai 200942 (CN)
(72) Inventor: Yu, Hejun, Shanghai 201907 (CN)
(74) Representative: Schiweck, Weinzierl & Koch
(86) International application number: PCT/CN2013/072698
(87) International publication number: WO 2013/143399

(57) **Abstract**

An electrode plate and an electrode assembly, a storage battery, and a capacitor comprising the electrode plate are provided. The electrode plate consists of at least two positive plates or at least two negative plates and an insulating film sandwiched between the at least two positive plates or the at least two negative plates. The electrode plate can improve the electric field intensity, and the charge time of the storage battery comprising the electrode plate is greatly reduced when compared with that of a battery with an existing structure.

## Description

### TECHNICAL FIELD OF THE INVENYION

The invention relates to an electrode plate and an electrode assembly, a storage battery and a capacitor comprising the electrode plate.

### BACKGROUND OF THE INVENYION

As the awareness of environmental protection and energy saving is getting deeper, new energy electric vehicles are developing rapidly with a huge market potential. In the meantime, development of solar energy industry gives rise to enormous demand for storage battery. There is also an apparent tendency to change traditional motorcycle to battery motorcycle; all of these cause the entire battery industry to get thriving.

Lithium-ion storage battery is environmentally friendly and efficient so it leads a future direction of the storage battery industry, however, the high cost and the raw material shortage restrict the speed and scale of the development. Lead-acid storage battery represents storage batteries of high pollution and low efficiency and thus the development is limited, but they still occupy most of the market shares due to the low use-cost. Therefore, any technical innovations on storage batteries are of great practical significance.

Common lithium-ion storage battery, lead-acid storage battery, nickel-metal hydride storage battery and the like are produced from different materials, based on different electricity generation mechanisms, and with different storage capacity, but they share one common feature in long charging time, which is more than 8 hours in general. The long charging time has become a technology bottleneck for the development of the entire storage battery industry. Therefore, fast-charging is rather meaningful to the entire storage battery industry.

At present, the studies on fast-charging are seeking a way out from battery charger, although getting some achievements, taking TH04-48/25A smart high-frequency pulse charger manufactured by Guangzhou Tianhong Battery Technology Ltd. as a representative, they are all high energy-consuming charging, which indicates they have not solved the fundamental problems resulting in charging difficulties; there is some research in the aspect of battery structure, for example, "super capacitor", where the research was conducted from the aspect of increasing capacitance, and the condition required for fast-charging is high current. The study of "high-energy nickel carbon super capacitor" leaded by Guotai Zhou, a member of the Chinese Academy of Engineering, is quite representative.

### SUMMARY OF THE INVENYION

The invention proceeds from the structure of electrode arrangement to provide an electrode plate, and an electrode assembly, a storage battery and a capacitor comprising the electrode plate. The electrode plate of the present invention can increase electric field intensity. The storage battery comprising the electrode plate has a greatly shorter charging time compared with the battery with an existing structure.

The technical solutions of the invention are as follows.

In one aspect, the present invention provides an electrode plate, which consists of at least two positive plates or at least two negative plates and an insulating film sandwiched between the at least two positive plates or between the at least two negative plates.

Preferably, one or more of the at least two positive plates or one or more of the at least two negative plates are substituted with metal plate(s); preferably, the metal plate is a copper plate, aluminum plate or zinc plate.

Preferably, the positive plate has a thickness of 1 mm-2 mm, preferably 2 mm. Preferably, the negative plate has a thickness of 0.6 mm-1 mm, preferably 1 mm. In another aspect, the invention provides an electrode assembly, comprising:
At least one first electrode plate, consisting of at least two positive plates and an insulating film sandwiched between the at least two positive plates;
At least one second electrode plate, consisting of at least two negative plates and an insulating film sandwiched between the at least two negative plates; and
An electrode separator, configured between the first electrode plate and the second electrode plate for separating the first electrode plate and the second electrode plate. Common electrode separator is acid absorption paper or base absorption paper, which may be used for absorbing electrolyte solution.

Preferably, in the above-mentioned electrode assembly, one or more of the at least two positive plates or one or more of the at least two negative plates are substituted with metal plate(s); preferably, the metal plate is copper plate, aluminum plate or zinc plate. Preferably, the first electrode plate and the second electrode plates are arranged alternately.

Preferably, the first electrode plate consists of two positive plates and an insulating film sandwiched between the two positive plates. The insulating film is as thin as possible, and a nanoscale film, a microscale film and a milliscale film can be used, for example, ordinary plastic wrap film can be used as an acid-resistant insulating film.

Preferably, the second electrode plate consists of two negative plates and an insulating film sandwiched between the two negative plates. The insulating film used between the two negative plates is the same as the insulating film used between the two positive plates.

Preferably, the number of the first electrode plate is n, the number of the second electrode plate is n or n+1, wherein n is an integer other than zero. The second electrode plate is one set more than the first electrode plate, and installed on both sides of the first electrode plate, that is, outside of the first electrode plate, for safety reasons.

Preferably, the positive plate of the first electrode plate has a thickness of 1 mm-2 mm, preferably 2 mm.

Preferably, the negative plate of the second electrode plate has a thickness of 0.6 mm-1 mm, preferably 1 mm.

Preferably, the electrode separator has a thickness of 0.25 mm-1 mm, preferably 0.75 mm.

Preferably, the distance between the first electrode plate and the second electrode plate is 0.25 mm-1 mm, preferably 0.75 mm. The distance is a distance excluding the thickness of the plates.

A storage battery comprising the above-mentioned electrode assembly is provided, wherein the storage battery comprises the above-mentioned electrode assembly, an electrolyte solution and a battery shell for storing the electrode assembly and the electrolyte solution.

In yet another aspect, the invention provides a capacitor comprising:
At least one first electrode plate, consisting of at least two positive plates and an insulating film sandwiched between the at least two positive plates;
At least one second electrode plate, consisting of at least two negative plates and an insulating film sandwiched between the at least two negative plates; and
A dielectric, configured between the first electrode plate and the second electrode plate.

In fact, it is the basic structure of a capacitor that two parallel metal plates, wherein one serves as a positive electrode, the other serves as a negative electrode, and a dielectric is sandwiched between them; it is the basic structure of the capacitor of the present invention that two parallel metal plates, insulated in between, form an electrode, and two of such electrodes are arranged in parallel, wherein one serve as a positive electrode, the other serves as a negative electrode, and a dielectric is sandwiched between them.

The present invention is described in details hereinafter.

The electrode assembly of the present invention is a dual-plate homopolar electrode assembly, with a basic structure of "AABB" and a spatial structure of "AABBAABB" repeated arrangement. According to the principle that like charges repel, opposite charges attract, in the electrode assembly, a positive plate and another positive plate or a negative plate and another negative plate is relatively closely arranged, but insulated in between, so that the field intensity between the positive and negative plates is double under the same voltage and current conditions.

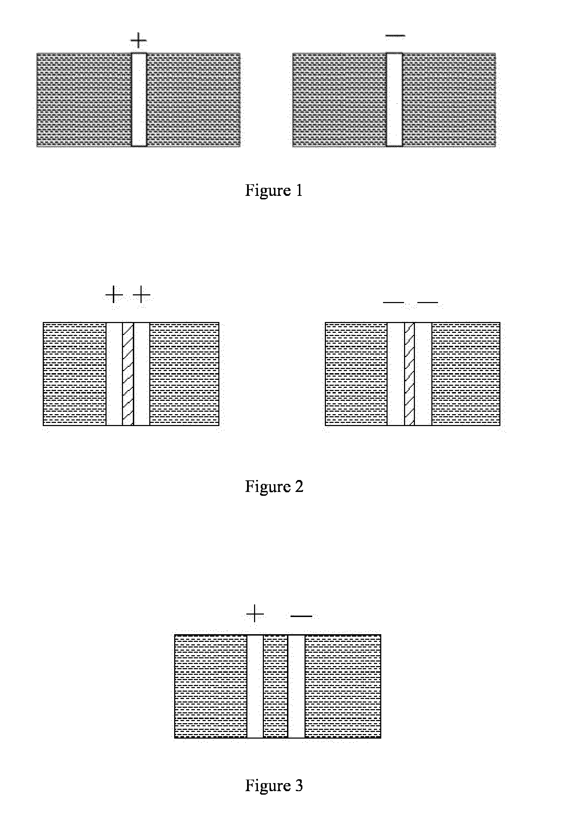

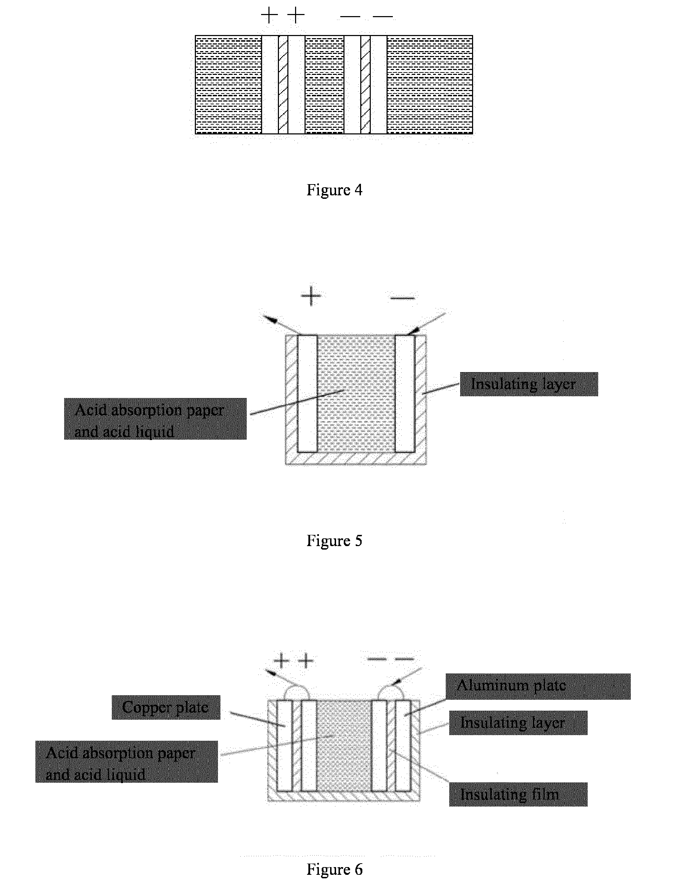

As shown in **Figures 1-4****,** **Figure 1** is a schematic diagram showing the electric field of a single-plate electrode, where the field intensities on either side of the plate are equal; **Figure 2** is a schematic diagram showing the electric field of a dual-plate electrode, where the field intensities on one side of the plate are zero, while the field intensities on the other side are doubled; **Figure 3** is a schematic diagram showing the electric field of an ordinary positive and negative single-plate combination, where the field intensity distribution does not change; **Figure 4** is a schematic diagram showing the electric field of a positive and negative dual-plate combination in an "AABB" structure, where the field intensity is doubled. An increase of the field intensity between a positive electrode and a negative electrode can expedite generation of electric charges and also increase charge density in the meanwhile, which is the basic principle that the "super capacitor" is based on. The "AABB" structure consists of a basic responding unit comprising a pair of positive electrode and negative electrode and homopolar plates installed outside of the basic responding unit.

The electrode assembly of the invention can be made into various storage batteries or capacitors by connecting the electrode plates in parallel, in series, or in a manner of combining parallel connection and series connection.

In one embodiment, the present invention provides an efficient fast-charging storage battery comprising the above-mentioned electrode assembly. The storage battery consists of the following components: 1. Positive plate; 2. Negative plate; 3. Separator paper, 4. Electrolyte solution (or solid electrolyte); 5. Insulating film; 6. Battery shell; 7. Busbar; 8. Terminal; 9. Battery cover; 10. Sealant. A positive plate is superposed on another positive plate, with an insulating film in between for separating the two positive plates completely. A negative plate is superposed on another negative plate, with an insulating film in between for separating the two negative plates completely. An electrolyte solution or solid electrolyte is added between a positive plate and a negative plate, and the positive and negative plates are separated by a separator paper. No matter via parallel or series connection, the positive and negative electrodes are arranged in a repeated arrangement order of positive-positive negative-negative positive-positive negative-negative.

The common features shared by the storage battery of the invention and an ordinary storage battery include:
The positive and negative plates of a lead-acid storage battery are completely consistent with the positive and negative plates used in the lead-acid storage battery of the invention; the positive and negative plates of an alkaline storage battery are completely consistent with the positive and negative plates used in the alkaline storage battery of the invention; the positive and negative plates of a lithium-ion storage battery are completely consistent with the positive and negative plates used in the lithium-ion storage battery of the invention; the positive and negative plates of an organic solvent storage battery are completely consistent with the positive and negative plates used in the organic solvent storage battery of the invention; the positive and negative plates of an inorganic solid storage battery are completely consistent with the positive and negative plates used in the inorganic solid storage battery of the invention; the positive and negative plates of a nickel-metal hydride storage battery are completely consistent with the positive and negative plates of the nickel-metal hydride storage battery of the invention; the materials used for all the components other than insulating film are completely consistent with the materials used by the original storage batteries of various properties.

The different features between the storage battery of the invention and an ordinary storage battery include:
Insulating films are used between a positive plate and another positive plate and between a negative plate and another negative plate of the storage battery of the present invention, wherein the insulating film used in the lead-acid storage battery is an acid-resistant insulating film; the insulating film used in the alkaline storage battery is an alkali-resistant insulating film; the insulating film used in the organic solvent storage battery is an organic solvent tolerant insulating film; the insulating film used in the inorganic solid storage battery is an insulating film for preventing the inorganic solid.

Structure: The arrangement order of the positive and negative plates is changed from the original "repeated arrangement of positive-negative positive-negative" to a "repeated arrangement of positive-positive negative-negative positive-positive negative-negative", wherein a positive plate and another positive plate or a negative plate and another negative plate are separated by an insulating film completely. The original arrangement that the positive and negative plates can coexist in a same responding unit is changed to an arrangement that each pair of positive plates and each pair of negative plates acts as an individual responding unit, which can be connected via busbars in parallel or in series.

Principle: Like charges repel, opposite charges attract. The closer the homopolar electrode plates are, the stronger the repulsive force and the polarity are. The field intensity between the positive and negative electrodes with enhanced polarity is maximal; the maximum field intensity results in the highest ionization effect. Applying such structure in various storage batteries can result in efficient fast-charging, while applying such structure in capacitors can result in fast-charging in a high-frequency circuit.

Similarities to super capacitor: They are both to increase the working field intensity by changing electrode plate structure to achieve fast-charging.

### Structural differences from super capacitor:

A super capacitor is to insert two electrodes of the same polarity in a same responding unit, wherein the respective current intensity on the two electrodes differs significantly in strength, so that, the purpose of increasing the field intensity is realized by means of double-layer electrode where the strong field intensity embraces the weak field intensity; while the invention is to cause field superimposed effects units between a positive electrode and a negative electrode outside of the responding by utilizing the enormous bias field generated from the repulsion of like charges so as to make the field intensity within the responding unit reach the maximum.

Relationship with a super capacitor: Compared with the structure and principle of the super capacitor, the invention has more controllable field intensity, and can also be compatible with the super capacitor so as to make the field intensity reaching a bigger value.

Mr. Guotai Zhou, a member of the Chinese Academy of Engineering, successfully developed a nickel-carbon super capacitor storage battery in June 2011. The nickel-carbon super capacitor storage battery has a doubled storage capacity and can be fully charged within 7 seconds, and holds a leading position worldwide and the highest position in the country; however, the working conditions of the battery require high current, and the maximum current is up to 2,000 A. The present invention achieves the increase of the field intensity from structure, and therefore complete fast-charging under a low current of 2 A. The present invention has an essential difference in structure from the principle of the super capacitor, meanwhile, the structural principle of the present invention and the principle of the super capacitor are not mutually exclusive and can be compatible with each other, that is, two techniques can be used simultaneously, which can push the outcome of the existing super capacitor to a new height, inferring from the theoretical effects.

### BRIEF DESCRIPTION OF THE DRAWINGS

**Figure 1** is a schematic diagram showing the electric field of a single-plate electrode;
**Figure 2** is a schematic diagram showing the electric field of a dual-plate electrode (an insulating film is between the two plates);
**Figure 3** is a schematic diagram showing the electric field of an ordinary positive and negative single-plate combination;
**Figure 4** is a schematic diagram showing the electric field of a positive and negative dual-plate combination (an insulating film is between the two plates) in an "AABB" structure;
**Figure 5** is a storage battery with a combination of single-electrode-pairs in an "AB" structure;
**Figure 6** is a storage battery with a combination of single-electrode-pairs in an "AABB" structure;
**Figure 7** is a storage battery with dual-electrode-pairs in an "AB" structure in series;
**Figure 8** is a storage battery with dual-electrode-pairs in an "AABB" structure in series;
**Figure 9** is a storage battery with dual-electrode-pairs in an "AB" structure in parallel;
**Figure 10** is a storage battery with dual-electrode-pairs in an "AABB" structure in parallel;
**Figure 11** is a storage battery with sextuplet-electrode-pairs in an "AB" structure in parallel;
**Figure 12** is a storage battery with sextuplet-electrode-pairs in an "AABB" structure in parallel;
**Figure 13** is a storage battery with sextuplet-electrode-pairs in an "AB" structure in series; and
**Figure 14** is a storage battery with sextuplet-electrode-pairs in an "AABB" structure in series;

Wherein, the arrows in the figures indicate connection to a charging electrode.

### DETAILED DESCRIPTION OF THE EMBODIMENTS

### Example 1

### 1. Laboratory equipment and materials

Positive plate: 2 mm in thickness, available from Yongji Power Supply Firm, Baoshan District, Shanghai;
Negative plate: 1 mm in thickness, available from Yongji Power Supply Firm, Baoshan District, Shanghai;
Electrode separator: Acid adsorption paper, 0.75 mm in thickness, available from Yongji Power Supply Firm, Baoshan District, Shanghai;
Storage battery: Dedicated battery for "Golden Power" branded electric moped, Model: JDL12V14Ah (5HR), 6-DZMJ-12, available from Yongji Power Supply Firm, Baoshan District, Shanghai;
Electrolyte solution: Sulfuric acid solution, available from Yongji Power Supply Firm, Baoshan District, Shanghai;
Multimeter: UT30 Series Palm-Size Digital Multimeter produced by Uni-Trend Technology (China) Co., Ltd., Shanghai;
Charger: HW-1 Smart Charging Set for Regenerative Battery by Shanghai Jinqiao Electronic Technology Co., Ltd.;
Discharger: DSC150 Discharger by Beijing Aodan Sci. & Tech. Development Co., Ltd.;
Insulating film: Processed in-house from the ordinary food plastic wrap film;
Copper plate and aluminum plate: Purchased from the outside, and then processed in-house;
Several alligator clips and some wire: Purchased from the outside, and then connected in-house afterwards;
Several vises in different sizes: Purchased from the outside, and then processed and installed in-house.

### 2. Experiment description:

The distance between positive and negative plates was 3.75 mm (including the thickness of the plates). In order to ensure a consistent distance, the positive and negative plates were clamped with alligator clips for adjusting the distance; time measurements were rounded to the nearest minute, mainly considering that it is a directional experiment.

### 3. Experimental procedure and results

Since the positive and negative plates made of lead paste were easy to crack under pressure in the absence of liquid, to ensure the effectiveness of the experiment, the copper plates or aluminum plates were used as outer plates in the experiment.
(1) The "JDL12V14Ah (5HR), 6-DZMJ-12" lead-acid storage battery was fully charged by the charger, followed by measuring the current and voltage using the multimeter. Next, the storage battery was discharged using the discharger to a level above the safety value, and then subjected to constant current charging under 12V2A. When the storage battery was fully charged, the current, the voltage and the charging time were recorded. The storage battery was then discharged again to the value originally recorded. This assay proved that the above-mentioned storage battery worked in good condition.
   The storage battery was dissected, but keeping the plates intact, for use.

### (2) Comparison of single electrode pairs

A set of positive and negative electrode plates was assembled according to **Figure 5****.** It was subjected to constant current charging under 2V0.3A; when it was fully charged, the current, the voltage and the charging time were recorded; it was then discharged again; the above-mentioned process was repeated for 20 times;

Outside of the positive plate in **Figure 5****,** a piece of copper plate with the same area as the positive plate was installed and then aligned with the positive plate, wherein an insulating film was sandwiched between the positive plate and the copper plate; similarly, a piece of aluminum plate was installed outside of the negative plate as per the same requirements. A set of positive and negative electrode plates was assembled according to **Figure 6****.** It was subjected to constant current charging under 2V0.3A; when it was fully charged, the current and the voltage were recorded; it was then discharged again; the above-mentioned process was repeated for 20 times;

Results: With regard to the structure in **Figure 5****,** the maximum charging time was up to 8 hours and 17 minutes, while the minimum charging time was 8 hours and 5 minutes, so the average charging time was 8 hours and 10 minutes; with regard to the structure in **Figure 6****,** the maximum charging time was up to 37 minutes, while the minimum charging time was 31 minutes, so the average charging time was 35 minutes;

Conclusion: The charging time of the "AABB" single-electrode-pair structure was 14.06 times faster than that of the "AB" single-electrode-pair structure on average.

### (3) Comparison of dual-electrode-pairs in series:

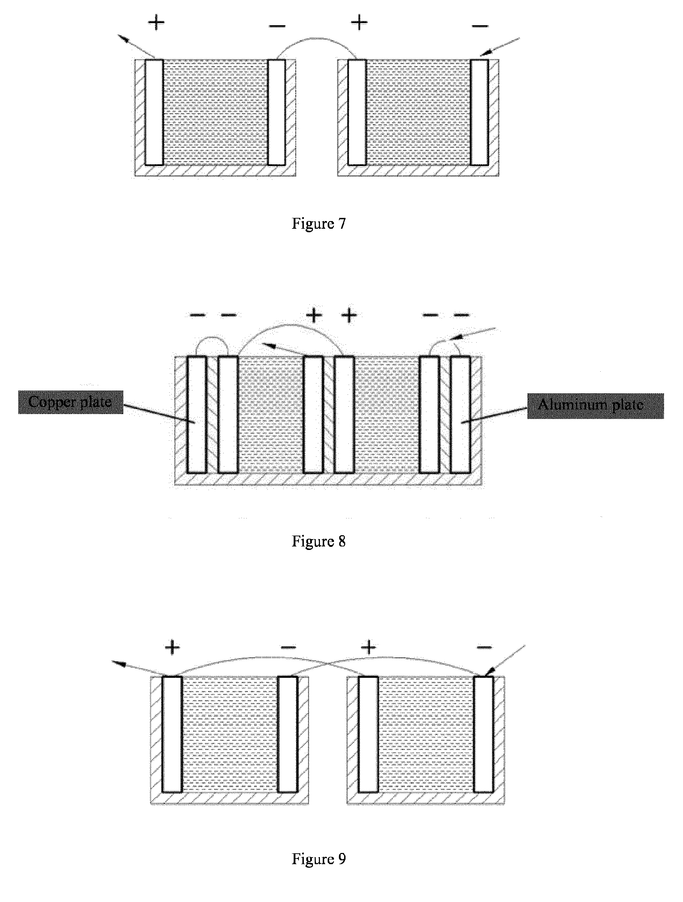

A set of positive and negative electrode plates was assembled according to **Figure 7****.** It was subjected to constant current charging under 4V0.3A; when it was fully charged, the current, the voltage and the charging time were recorded; it was then discharged again; the above-mentioned process was repeated for 20 times;

According to **Figure 8****,** a piece of copper plate with the same area as the positive plate was installed outside of the positive plate, and then aligned with the positive plate, wherein an insulating film was sandwiched between the positive plate and the copper plate; similarly, a piece of aluminum plate was installed outside of the negative plate as per the same requirements. It was subjected to constant current charging under 4V0.3A; when it was fully charged, the current and the voltage were recorded; it was then discharged again; the above-mentioned process was repeated for 20 times;

Results: With regard to the structure in **Figure 7****,** the maximum charging time was up to 8 hours and 38 minutes, while the minimum charging time was 8 hours and 25 minutes, so the average charging time was 8 hours and 30 minutes; with regard to the structure in **Figure 8****,** the maximum charging time was up to 37 minutes, while the minimum charging time was 32 minutes, so the average charging time was 35 minutes;

Conclusion: The charging time of the structure of "AABB" dual-electrode-pair in series was 14.65 times faster than that of the structure of "AB" dual-electrode-pair in series on average.

### (4) Comparison of dual-electrode-pairs in parallel:

A set of positive and negative electrode plates was assembled according to **Figure 9****.** It was subjected to constant current charging under 2V0.6A; when it was fully charged, the current, the voltage and the charging time were recorded; it was then discharged again; the above-mentioned process was repeated for 20 times;

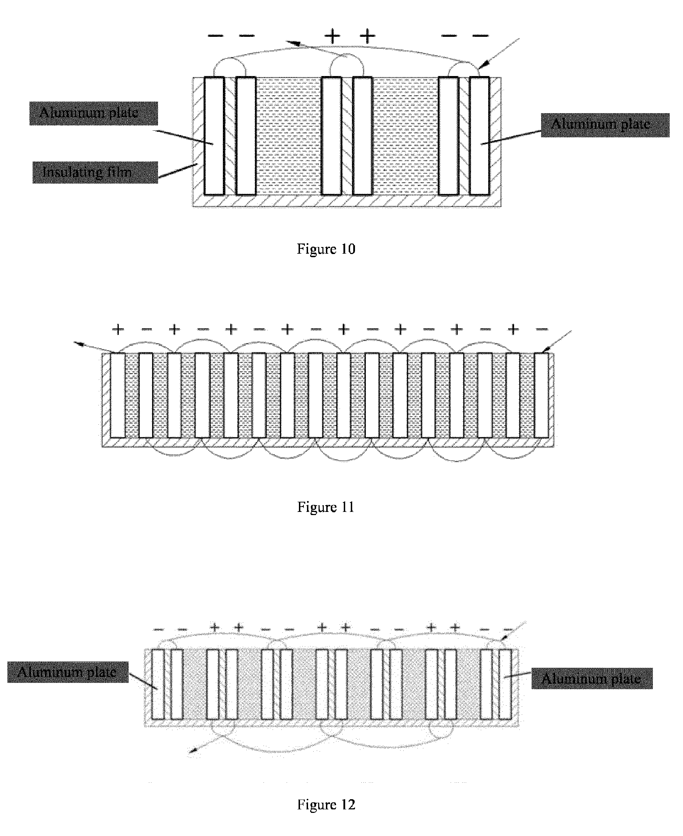

According to **Figure 10** (wherein the positive plates and the negative plates were deposited in two reaction tanks, respectively), a piece of copper plate with the same area as the positive plate was installed outside of each positive plate, and then aligned with the positive plates, wherein an insulating film was sandwiched between the positive plate and the copper plate; similarly, a piece of aluminum plate was installed outside of each negative plate as per the same requirements. It was subjected to constant current charging under 2V0.6A; when it was fully charged, the current and the voltage were recorded; it was then discharged again; the above-mentioned process was repeated for 20 times.

Results: With regard to the structure in **Figure 9****,** the maximum charging time was up to 8 hours and 17 minutes, while the minimum charging time was 8 hours and 11 minutes, so the average charging time was 8 hours and 13 minutes; with regard to the structure in **Figure 10****,** the maximum charging time was up to 36 minutes, while the minimum charging time was 34 minutes, so the average charging time was 35 minutes;

Conclusion: The charging time of the structure of "AABB" dual-electrode-pair in parallel was 14.15 times faster than that of the structure of "AB" dual-electrode-pair in parallel on average.

### (5) Comparison of sextuplet-electrode-pairs in parallel

A set of positive and negative electrode plates was assembled according to **Figure 11****.** It was subjected to constant current charging under 2V1.8A; when it was fully charged, the current, the voltage and the charging time were recorded; it was then discharged again; the above-mentioned process was repeated for 20 times;

According to **Figure 12****,** a piece of copper plate with the same area as the positive plate was installed outside of each positive plate, and then aligned with the positive plates, wherein an insulating film was sandwiched between the positive plate and the copper plate; similarly, a piece of aluminum plate was installed the outside of each negative plates as per the same requirements. It was subjected to constant current charging under 2V1.8A; when it was fully charged, the current and the voltage were recorded; it was then discharged again; the above-mentioned process was repeated for 20 times;

Results: With regard to the structure in **Figure 11****,** the maximum charging time was up to 8 hours and 40 minutes, while the minimum charging time was 8 hours and 30 minutes, so the average charging time was 8 hours and 37 minutes; with regard to the structure in **Figure 12****,** the maximum charging time was up to 37 minutes, while the minimum charging time was 34 minutes, so the average charging time was 35 minutes;

Conclusion: The charging time of the structure of "AABB" sextuplet-electrode-pair in parallel was 14.8 times faster than that of the structure of "AB" sextuplet-electrode-pair in parallel on average.

### (6) Comparison of sextuplet-electrode-pairs in series:

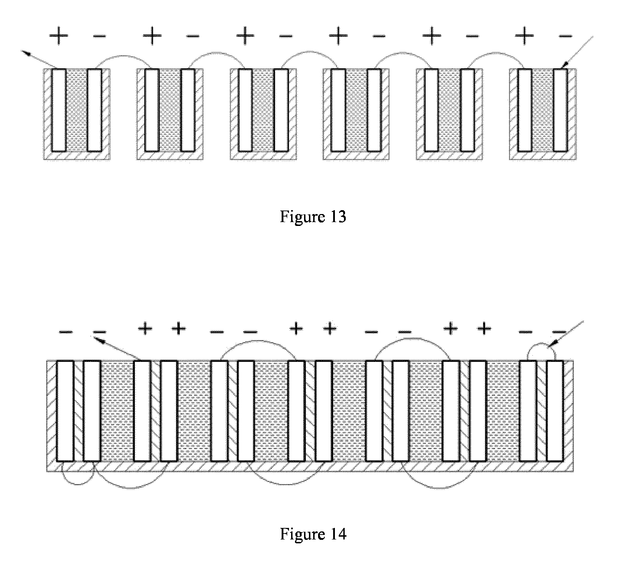

A set of positive and negative electrode plates was assembled according to **Figure 13****.** It was subjected to constant current charging under 12V0.3A; when it was fully charged, the current, the voltage and the charging time were recorded; it was then discharged again; the above-mentioned process was repeated for 20 times;
According to **Figure 14****,** a piece of copper plate with the same area as the positive plate was installed outside of each positive plate, and then aligned with the positive plates, wherein an insulating film was sandwiched between the positive plate and the copper plate; similarly, a piece of aluminum plate was installed the outside of each negative plate as per the same requirements. It was subjected to a constant current charging under 12V0.3A; when it was fully charged, the current and the voltage were recorded; it was then discharged again; the above-mentioned process was repeated for 20 times;
Results: With regard to the structure in **Figure 13****,** the maximum charging time was up to 9 hours and 02 minutes, while the minimum charging time was 8 hours and 45 minutes, so the average charging time was 8 hours and 52 minutes; for the structure in **Figure 14****,** the maximum charging time was up to 36 minutes, while the minimum charging time was 34 minutes, so the average charging time was 35 minutes;
Conclusion: The charging time of the structure of "AABB" sextuplet-electrode-pair in series was 15.27 times faster than that of the structure of "AB" sextuplet-electrode-pair in series on average.

### 4. Brief summary of the experiment

It can be leant from the experiment above that: the "AABBAABB" repeated electrode-pair structure had a more significant advantage in charging time of storage battery than the traditional "ABAB" repeated electrode-pair structure; the doubled field intensity of positive and negative electrodes had a significant impact on charge generation in the storage battery; by utilizing the "AABB" repeated structure, efficient and fast charging could be achieved.

It should be noted that the storage battery with an "AABB" repeated structure has a negligible cost increase during fast charging, features in high current, has much higher short-circuit current than the storage battery comprising the ordinary structures, reading from the experimental records; it provides us with a new approach to improving battery storage capacity.

The electrode plate and the electrode assembly, storage battery and capacitor comprising the electrode plate provided by the present invention have been described in details hereinbefore. The principle and embodiments of the present invention have been illustrated herein through specific examples, and the descriptions of the above examples are only intended to help understanding the method and its core concept of the present invention. It should be noted that, those of ordinary skills in the art can make a number of improvements and modifications on the present invention without departing from the principle of the present invention, and these improvements and modifications also fall into the protection scope of the claims of the present invention.

## Claims

1. An electrode plate, consisting of at least two positive plates or at least two negative plates and an insulating film sandwiched between said at least two positive plates or said at least two negative plates.

2. The electrode plate according to Claim 1, wherein one or more of said at least two positive plates or said at least two negative plates are substituted with metal plate(s); preferably, said metal plate is copper plate, aluminum plate or zinc plate.

3. The electrode plate according to Claim 1 or 2, wherein said positive plate has a thickness of 1 mm-2 mm, preferably 2 mm.

4. The electrode plate according to any of Claims 1-3, wherein said negative plate has a thickness of 0.6 mm-1 mm, preferably 1 mm.

5. An electrode assembly, comprising:
At least one first electrode plate, consisting of at least two positive plates and an insulating film sandwiched between said at least two positive plates;
At least one second electrode plate, consisting of at least two negative plates and an insulating film sandwiched between said at least two negative plates; and
An electrode separator, configured between said first electrode plate and said second electrode plate for separating said first electrode plate and said second electrode plate.

6. The electrode plate according to Claim 5, wherein one or more of said at least two positive plates or said at least two negative plates are substituted with metal plate(s); preferably, said metal plate is copper plate, aluminum plate or zinc plate.

7. The electrode assembly according to Claim 5 or 6, wherein said first electrode plate and said second electrode plate are arranged alternately.

8. The electrode assembly according to any of Claims 5-7, wherein said first electrode plate consists of two positive plates and an insulating film sandwiched between said two positive plates.

9. The electrode assembly according to any of Claims 5-8, wherein said second electrode plate consists of two negative plates and an insulating film sandwiched between said two negative plates.

10. The electrode assembly according to any of Claims 5-9, wherein the number of said first electrode plate is n, the number of said second electrode plates is n or n+1, wherein n is an integer other than zero.

11. The electrode assembly according to any of Claims 5-10, wherein the positive plate of said first electrode plate has a thickness of 1 mm-2 mm, preferably 2 mm.

12. The electrode assembly according to any of Claims 5-11, wherein the negative plate of said second electrode plate is 0.6 mm-1mm, preferably 1 mm.

13. The electrode assembly according to any of Claims 5-12, wherein said electrode separator has a thickness of is 0.25 mm-1 mm, preferably 0.75 mm.

14. The electrode assembly according to any of Claims 5-13, the distance between said first electrode plate and said second electrode plate is 0.25 mm-1 mm, preferably 0.75 mm.

15. A storage battery, comprising the electrode assembly according to any of Claims 5-14, an electrolyte solution and a battery shell for storing the electrode assembly and the electrolyte.

16. A capacitor, comprising:
At least one first electrode plate, consisting of at least two positive plates and an insulating films sandwiched between said at least two positive plates;
At least one second electrode plate, consisting of at least two negative plates and an insulating film sandwiched between said at least two negative plates; and,
A dielectric, configured between said first electrode plate and said second electrode plate.
